# EUROPEAN PATENT APPLICATION

(11) **EP 4 170 280 A1**
(43) Date of publication of application: **26.04.2023**
(21) Application number: 20941058.8
(22) Date of filing: 18.06.2020
(51) Int. Cl.: G01B 11/00, G03B 35/02

(54) **METHOD AND DEVICE FOR MONITORING THE SHAPE OF HARD-TO-REACH COMPONENTS**

(71) Applicant: Turboscan, LLC., Moscow, 121205 (RU)
(72) Inventor: CHICHIGIN, Boris Anatolyevich, Moscow, 111399 (RU)
(74) Representative: Chimini, Francesco
(86) International application number: PCT/RU2020/000298
(87) International publication number: WO 2021/256953

(57) **Abstract**

The group of inventions relates to measuring technology, in particular to methods for inspection of the shape of hard-to-reach parts, and can be used in power engineering, transport, mechanical engineering and other fields of technology to measure the geometric parameters of a part. The technical result of the invention as claimed is to increase the accuracy, reliability and performance of measurements related to determining the shape and defects of parts installed in cavities, as well as the shape of the internal cavities of products and surface discontinuities. The method for controlling the shape of hard-to-reach parts, including the stages of delivery inside the controlling equipment of the executive part of the control system equipped with a miniature stereo camera, for navigation across the path of which white light illumination is used, the white light illumination is transmitted through an optical fiber, after leaving which the given indicatrix of intensity is formed by means of the first lens. This is followed by the stage of turning off or dimming the white light, followed by turning on the laser, which, by means of an optical fiber transmitting a laser stream passing through the second lens, forms a beam of rays, which, passing through a diffraction optical element, forms an image with small laser spots of intensity on the hard-to-reach surface of the part to obtain a stereo image of the hard-to-reach surface of the part. A three-dimensional hard-to-reach surface is restored, while laser intensity spots on a pair of flat images are used to automatically identify the same points of object on stereo images with a given degree of confidence. The inspection system consists of a miniature digital camera that forms a stereo image of the object under control, a white light illumination unit, a laser illuminator operating in pulsed or continuous mode, a handle placed on the articulation control panel, a PC for processing and displaying information, articulation cables, two lenses, DOE, a laser fiber, lighting fiber, power line and a video signal transmission line.

## Description

The group of inventions relates to measuring technology, in particular to methods and devices for controlling the shape of hard-to-reach parts and objects, and can be used in power engineering, medicine, transport, mechanical engineering and other fields to measure the geometric parameters of objects.

The following solutions are known from the state of the art.

A high-speed three-dimensional method for optical measurement of the geometric size of manufactured parts is known (see patent US 8896844, publ. 25.11.2014), which includes sequential supplying the parts so that the movement of parts on the way to the video recording point, at which each part has a predetermined position and orientation for optical measurement of each part having an outer end surface and an inner end surface on the first end face of the part, while the body of each part has a pocket for holding the part located between the end surfaces, designing a radiation line having a predetermined orientation on the end surfaces to obtain images of reflected light from the edges of the part in the form of lines, direct reflection from the end surfaces of the part, detection of reflected radiation lines on one or more image plane(s) to obtain electrical signals, and processing of the electrical signals to obtain the geometric size.

The disadvantage of the described solution is the need to maintain a constant distance and a given position between the emitter, the object under control and the fixing device, which is unattainable when accessing the internal cavities of technological objects along a complex spatial path, as well as the impossibility of the specified invention to inspect objects of another shape (the invention controls the sleeves and uses a mixture of white light to control the ends and a laser to control the cylindrical part of the sleeve).

The method is known for automatically detecting the known parameter of the measured object on the object under control using a video monitoring system, selected as the prototype (see patent US 9412189, publ. 09.08.2016), including displaying the object under inspection on the display, detecting known parameter of the measured object on the object under inspection using a central processor, displaying a set of available measurement types, containing a measurement type associated with the evaluated known parameter of the measured object using a central processor, obtaining a selection of the measurement type associated with the evaluated known parameter of the measured object, automatically positioning a set of measurement markers on the display the image on the display using the central processor, and the positions of the set of measurement markers are based on the selected type of measurement associated with the evaluated known parameter of the measured object, and the display of the value of the parameter of the measured object calculated by the central processor using the positions of the set of measurement markers. The disadvantage of this invention is the need for sequential projection of three images of different configurations onto the object, which complicates processing and reduces the performance of the control and does not allow control of rotating or moving elements (rotating at speed of more than 2 rpm).

The technical problem solved by the proposed invention is to increase the efficiency and performance of inspection the shape of hard-to-reach parts, as well as to make it possible to inspect rotating and moving objects and measure the geometric parameters of the shape of the object, in particular discontinuities.

The technical result of the invention as claimed is to increase the accuracy, reliability and performance of measurements related to determining the shape and defects of parts installed in cavities, as well as the shape of the internal cavities of products and surface discontinuities. In addition, the invention can also be used to control the external shape of products, including rotating products or products that perform periodic movements.

The technical result achieved by the implementation of the method is due to the method of testing the shape of the product white light illuminating is performed with white light source installed in the inspection system providing navigation across delivery path of an executive part of the inspection system, and delivery the equipment of the executive part of the control system to the hard-to-reach part, which is equipped with a miniature stereo camera, wherein white light radiation transmits through white light fiber optic, a first lens for the formation of a given radiation pattern of the object under control is provided at the output of the white light fiber, after delivery of the executive part of the control system, turning off or dim the white light is carried out and formation of laser radiation transmitted through the laser light stream optical fiber, wherein at the output of the laser light fiber a second lens ensuring the convergence of the laser stream, providing the given width of the laser light stream beam, using a diffractive optical element located at the distance from the second lens to provide formation on hard-to-reach surface of part of the image with a small laser intensity spots providing a stereo image of the hard-to-reach surface of part using miniature optical stereo camera, when projecting the laser image with small spots of intensity on the hard-to-reach surface of part, transmitting the stereo image obtained to the processing microcontroller unit, using data processing tools for microcontroller unit recover the three-dimensional hard-to-reach surfaces, while use the laser intensity spots on a pair of flat images in order to automatically identify the same points of objects in stereo images with a given degree of confidence.

In a particular embodiment, the method provides delivery of the equipment to the part located inside the equipment.

In a particular embodiment of the method, the stereo images are obtained from different angles, and provide three-dimensional recovering of the hard-to-reach surface for different angles and additional three-dimensional recovering of a hard-to-reach surface of the part by alignment three-dimensional models corresponding to pairs of flat images obtained from different angles.

In a particular embodiment of the method, in order to identify discontinuities of the hard-to-reach surface of the part, a three-dimensional model are obtained from the recovering results is compared with a reference model and, for the identified discontinuities, the geometric parameters of the discontinuity are determined, in particular, the area, length and width and depth.

In a particular embodiment of the method, a three-dimensional model obtained from the simulation results is compared with the reference model and, if there are discrepancies, the wear or loss of the part thickness corresponding to the value of the discrepancies is determined.

In a particular embodiment of the method, for a moving part, the rotation period or the speed of movement of the part relative to the executive part of the control system is measured and the product is pulsed with laser radiation with a set repetition period and duration of laser radiation pulses, ensuring that smearing is avoided in the image of stereo pairs.

In a particular embodiment of the method, articulation of the executive part of the control system is provided using a mechanical transmission of the movement of controls to the executive part of the control system, wherein the mechanical transmission is provided by cables made with the possibility of transmitting the angular movement of the executive part of the control system in two mutually orthogonal directions.

The technical result as claimed is achieved by means of design of the device for controlling the shape of hard-to-reach surface of parts comprising measuring head attached to a flexible means of delivery, power and data transmission lines, and a white light optical fiber and a laser light stream optical fiber, wherein a controlled white light source is placed at the input of the white light optical fiber, a controlled laser radiation source is placed at the input of the laser beam optical fiber, a first lens is located at the output of the white light optical fiber, the first lens is placed in the measuring head and made with the possibility of forming a given radiation pattern of the object under control, a second lens is located at the output of the optical fiber, the second lens is placed in the measuring head and made with the possibility of ensuring the convergence of the laser stream, providing a given width of the laser light beam, and a diffraction optical element located at a distance from the second lens and made with the possibility of forming an image with small laser spots of intensity on the hard-to-reach surface of the part, a miniature optical stereo camera is also placed in the measuring head to provide a stereo image of the hard-to-reach surface of the part using a laser image with small laser intensity spots on the hard-to-reach surface of the part, and a processing microcontroller unit made with the possibility to restore a three-dimensional hard-to-reach surface from an image from the stereo camera using laser intensity spots on a pair of flat images for automatic identification of identical points in the object on stereo images with a given degree of confidence.

In a particular embodiment, cables pass through the cavity inside the flexible means of delivery, designed to move the movable part of the measuring head in two mutually orthogonal directions relative to the flexible means of delivery.

In a particular embodiment, the device contains a cable control unit made with the possibility of providing articulation of the measuring head during mechanical transmission to the measuring head of the movement of the controls of the cable control unit.

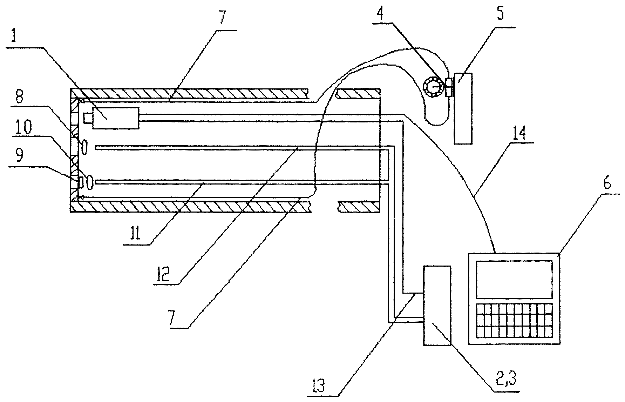

Further, the solution is explained by references to the figure, which shows diagram of the device for controlling the shape of hard-to-reach parts.

The device contains a measuring head attached to a flexible means of delivery, through a cavity inside which cables 7 pass, the cables are designed to move the movable part of the measuring head in two mutually orthogonal directions relative to the flexible means of delivery, power line 13 and line 14 for the transmission of video data.

Optical fiber 12 for transmitting white light and the lenses for white light, as well as white light illumination unit 2, make up the white light illumination channel. Optical fiber 11 for transmitting laser, diffraction optical element 9 (DOE), lens 10 for laser illumination and a laser illuminator 3 operating in pulsed or continuous mode make up a structured laser illumination channel. Articulation cables 7 and articulation control panel 5 make up the articulation system.

The diffraction element illuminated by laser radiation creates an image of many small laser spots on the surface of the object, which simplifies the processing of the obtained images and allows identifying the same points of the object on the images of a stereo or three-channel camera without human intervention.

The lighting unit consists of a white light source and a semiconductor laser. The light streams of the laser and the white light lamp are directed into separate optical fibers. A controlled white light source 2 is placed at the input of the white light fiber 12, a controlled laser radiation source 3 is placed at the input of the laser beam fiber 11. At the output of the white light fiber 12, the first lens 8 is located, placed in the measuring head to give the necessary directivity to the light stream.

The lens 8 is made with the possibility of forming a given indicatrix of intensity of the object under control. At the output of the optical fiber of laser radiation, the second lens 10 is located in the measuring head, made with the possibility of ensuring the necessary convergence of the laser flux, providing a given beam width of the laser light stream, as well as the diffraction optical element 9 (DOE) located at a distance providing the required beam width from the second lens 10, made with the possibility of forming an image with small laser spots of intensity on a hard-to-reach surface of the part.

Miniature optical stereo camera 1 is also placed in the measuring head to provide a stereo image of the hard-to-reach surface of the part using a laser image with small intensity spots when projecting onto the hard-to-reach surface of the part. The stereo camera consists of two video cameras located at a certain distance from each other, which can have two separate lenses, two separate video matrices, a signal receiving and transmitting unit (can be shared or separate for each camera), wires for transmitting the received video image signal through the flexible means of delivery. Also, the cameras can have one lens and one video matrix, with an artificial separation of two optical streams using an optical system, for example, a biprism.

Two optical channels of the stereo camera can be shifted in space towards each other, so that the optical axes of these channels have an acute angle between them, in order to bring the stereo region closer to the measuring head of the device.

Instead of the stereo camera, a camera with two or more optical channels can be used.

Also, instead of the camera, two optical light guides with lenses can be used, the image from which is transmitted to two cameras located outside the working body of the device, in order to use high-speed cameras that cannot be installed in the measuring head of the device due to the overall dimensions.

The device can also contain an additional fiber for transmitting laser radiation and an additional laser radiation source that differs in wavelength from the first, wherein laser radiation is transmitted along a fiber that has a lens and a diffraction optical element at the output, creating intensity spots on the surface of the object with a step such that the average distance between the spots is greater than from the first laser radiation source, which allows you to get a unique image in each separate area of the object surface and identify the same points of the object on images of the stereo or three-channel camera with greater confidence without human intervention.

In a particular embodiment, the field of view of the camera and the light streams are directed not parallel to the axis of the measuring head, but at an angle, in the most common embodiment, having a value of 90 degrees, optical prisms or mirrors are used to change the direction of white light and laser radiation, rotation of the optical axis of the cameras or an optical prism or a mirror is used to change the direction of sight of the stereo or three-channel camera.

In a particular embodiment, the diffraction element creates a matrix of squares of a certain dimension on the surface of the object, wherein each square has a unique set of laser spots that are not repeated in other squares, which simplifies the processing of the obtained images and allows identifying the same points of the object on the images of a stereo or three-channel camera with greater confidence without human intervention.

In a particular embodiment, the device includes several measuring heads located at a certain distance between each other, which is used to quickly obtain an image of an extended object.

The monitoring device also includes processing microcontroller unit 6, made with the possibility to recover the three-dimensional hard-to-reach surface from an image from a stereo camera using laser intensity spots on a pair of flat images for automatic identification of identical points in the object on stereo images with a given degree of confidence.

To implement the method for inspection the surface of an equipment part located inside the equipment, an endoscope with a miniature camera with the possibility to control the working part of the system by mechanical articulation is delivered inside the inspected equipment. To navigate the system across the path, white light illumination is used, which is transmitted through an optical fiber. At the output of the white light fiber, a lens is located to form a given radiation pattern of the object under control. The articulation of the device is carried out by turning the handle 4 (mechanical articulation system) on the articulation control panel 5, wherein the rotation causes the cables to move, so the working part of the system can bend in two mutually orthogonal directions (or one direction, or may be absent). Then, the white light is turned off or dimmed to form the radiation required for performing measurements using a laser. At the output of the laser light stream fiber, a lens is located to give the necessary convergence to the stream, at a distance from the lens that provides the required beam width, a diffraction optical element is located to form an image with small intensity spots on the surface of the object under control.

The algorithm for recovery a three-dimensional model from stereo images consists in the camera pre-calibration and obtaining information about its parameters. Then two stereo frames formed by a calibrated camera are obtained. After that, the three-dimensional observed scene is recovered using stereo images and camera parameters.

Thus, the surface of the internal space of the equipment, including the surface of the part and its discontinuities, is controlled by a miniature optical camera that forms a stereo image, while a laser image with small spots of intensity is projected onto the part. The image generated by the camera is transmitted to a computer or processing unit. Using a digital image of the surface of the part and a laser image with intensity spots projected on it, the computer software reconstructs a three-dimensional surface from a stereo image, and laser intensity spots on the images of the right and left stereo pairs are used to automatically identify identical points, without requiring operator intervention.

In the case of inspection of the surfaces of parts with the stereo camera from different angles, the software also performs additional alignment of three-dimensional models corresponding to pairs of flat images obtained from different angles of the three-dimensional scene to obtain an overall picture.

According to the recovered surface, the shape parameters of objects are measured or compared with the parameters of the reference model with the subsequent calculation of deviations, while, in case of detection of discontinuity, the geometric parameters of the discontinuity are measured, in particular, the area, length and width, depth, the parameters of the geometric shape of the parts can also be measured to determine wear and loss of thickness.

In the case of inspection of a moving part, the period of movement of the part relative to the executive part of the control system is measured and the item is illuminated with pulsed laser radiation with a set repetition period and duration of laser radiation pulses by means of a pulse time and laser pulse repetition frequency controller in order to avoid blurring on the image of stereo pairs.

To measure the parameters of the discontinuity of parts, computer software for image processing and analysis can be used, which allows:
- get an image from the camera optical system and record it to the computer hard disk;
- recover the three-dimensional surface of the object from the existing digital stereo image of the object from the laser intensity spots projected on its surface;
- in the case of observing the surfaces of parts with a stereo camera from different angles, the software aligns the restored surfaces of the three-dimensional scene to obtain an overall picture;
- automatically highlight defective areas on the surface of the part or areas of interest;
- calculate geometric parameters, in particular, the length, width, depth of defects or the object.

The results are displayed as a table and saved to the hard disk.

Implementation of the method for controlling the shape and measuring the parameters of discontinuities of hard-to-reach equipment parts, in particular, turbine blades or compressors, makes it possible to reach a new level of equipment operation, allowing to reduce the time for inspection, number of breakdowns and downtime due to damage to hard-to-reach equipment parts during operation, carry out control with a rotating rotor, which gives a sharp gain in control performance.

## Claims

1. Method of inspection of the shape of hard-to-reach surface of part using an inspection system, including white light illuminating with white light source installed in the inspection system providing navigation across delivery path of an executive part of the inspection system, and delivery the equipment of the executive part of the control system to the hard-to-reach part, which is equipped with a miniature stereo camera, wherein white light radiation transmits through white light fiber optic, a first lens for the formation of a given radiation pattern of the object under control is provided at the output of the white light fiber, after delivery of the executive part of the control system, turn off or dim the white light is carried out and formation of laser radiation transmitted through the laser light stream optical fiber, wherein at the output of the laser light stream fiber a second lens ensuring the convergence of the laser flux, using a diffractive optical element located at the distance from the second lens to provide the given width of the laser light stream beam formation on hard-to-reach surface of part of the image with a small spots of laser intensity providing a stereo image of the hard-to-reach surface of part using miniature optical stereo camera, when projecting the laser image with small spots of intensity on the hard-to-reach surface of part, transmitting the stereo image obtained to the processing microcontroller unit, using data processing tools for microcontroller unit recover the three-dimensional hard-to-reach surfaces, while use the laser intensity spots on a pair of flat images in order to automatically identify the same points of objects in stereo images with a given degree of confidence.

2. The method according to claim 1, **characterized in that** it provides delivery to the part of the equipment located inside the equipment.

3. The method according to claim 1, **characterized in that** stereo images are obtained from different angles, and provide three-dimensional recovering of the hard-to-reach surface for different angles and additional three-dimensional recovering of a hard-to-reach surface of the part by alignment three-dimensional models corresponding to pairs of flat images obtained from different angles.

4. The method according to claim 1 or 2, **characterized in that** in order to identify discontinuities of the hard-to-reach surface of the part, a three-dimensional model obtained from the recovering results is compared with a reference model and, for the identified discontinuities, the geometric parameters of the discontinuity are determined, in particular, the area, length and width and depth.

5. The method according to claim 1 or 2, **characterized in that** compare the three-dimensional model obtained from the measurement results with a reference model and, if there are discrepancies, determine the amount of discrepancies: the amount of wear, erosion damage, loss of part thickness, shape curvature, deformation, surface defects, absence or partial breakage of individual structural elements, peeling, fracture, burnout, destruction, presence of corrosion damage, presence of deposits.

6. The method according to claim 1 or 2, **characterized in that** for a moving part, the period of movement of the part relative to the executive part of the inspection system is measured and the product is pulsed with laser radiation with a set repetition period and duration of laser radiation pulses, ensuring that the image of stereo pairs is not smeared.

7. The method according to claim 1 or 2, **characterized in that** articulation of the executive part of the control system is provided using a mechanical transmission of the movement of controls to the executive part of the inspection system, wherein the mechanical transmission is provided by cables made with the possibility of transmitting the angular movement of the executive part of the control system in two mutually orthogonal directions.

8. A device for inspection of shape of hard-to-reach surface of part containing a measuring head attached to a flexible or rigid means of delivery, power and data transmission lines, and a white light optical fiber and a laser light stream optical fiber, wherein a controlled white light source is placed at the input of the white light optical fiber, a controlled laser radiation source is placed at the input of the laser beam optical fiber, a first lens is located at the output of the white light optical fiber, the first lens is placed in the measuring head and made with the possibility of forming a given radiation pattern of the object under control, a second lens is located at the output of the optical fiber, the second lens is placed in the measuring head and made with the possibility of ensuring the convergence of the laser stream, and a diffraction optical element located at a distance from the second lens, providing a given width of the laser light beam, made with the possibility of forming an image with small laser spots of intensity on the hard-to-reach surface of the part, a miniature optical stereo camera is also placed in the measuring head to provide a stereo image of the hard-to-reach surface of the part using a laser image with small laser intensity spots on the hard-to-reach surface of the part, and a processing microcontroller unit made with the possibility to restore a three-dimensional hard-to-reach surface from an image from the stereo camera using laser intensity spots on a pair of flat images for automatic identification of identical points in the object on stereo images with a given degree of confidence.

9. The device according to claim 8, **characterized in that** cables pass through the cavity inside the flexible means of delivery, designed to move the movable part of the measuring head in two mutually orthogonal directions relative to the flexible means of delivery.

10. The device according to claim 8, **characterized in that** it contains a cable control unit made with the possibility of providing articulation of the measuring head during mechanical transmission to the measuring head of the movement of the cable control unit controls.

11. The device according to claim 8 or 9, **characterized in that** the camera with two or more optical channels is placed in the measuring head.

12. The device according to claim 8 or 9, **characterized in that** the two optical channels of the stereo camera are shifted in space towards each other, so that the optical axes of these channels have an acute angle between them, in order to bring the stereo region closer to the measuring head of the device.

13. The device according to claim 8 or 9, **characterized in that** two optical light guides with lenses are placed in the measuring head, the image from which is transmitted to two cameras located outside the working body of the device, for the purpose of using high-speed cameras that cannot be installed in the measuring head of the device due to the overall dimensions.

14. The device according to claim 8, **characterized in that** it contains an additional fiber for transmitting laser radiation and an additional laser radiation source that differs in wavelength from the first, wherein laser radiation is transmitted along a fiber having a lens and a diffraction optical element at the output, the diffraction element creates intensity spots on the surface of the object with a step such that the average distance between the spots is greater than from the first laser radiation source.

15. The device according to claim 8, **characterized in that** the field of view of the camera and the light streams are directed at 90 degrees angle to the axis of the measuring head, optical prisms or mirrors are used to change the direction of white light and laser radiation, rotation of the optical axis of the cameras or an optical prism or a mirror is used to change the direction of sight of the stereo or three-channel camera.

16. The device according to claim 8, **characterized in that** the device includes several measuring heads located at a certain distance between each other, which is used to quickly obtain an image of an extended object.

17. The device according to claim 8, **characterized in that** the diffraction element creates a matrix of squares of a certain dimension on the surface of the object, wherein each square has a unique set of laser spots that are not repeated in other squares, which simplifies the processing of the obtained images and allows identifying the same points of the object on the images of a stereo or three-channel camera with greater confidence without human intervention.

18. The device according to claim 8, **characterized in that** it is equipped with a probe delivery unit, made, for example, in the form of a roller controlled by an electric signal, which is brought into contact with the outer shell of the executive part of the device, and when a signal is given, the executive part of the device can progressively move forward/backward by rotating the roller.

19. The device according to claim 9 or 18, **characterized in that** the movement of the articulation cables is performed by the actuators by applying control signals to them, the signals are generated when the operator presses the controls of the device.

20. The device according to claim 9 or 18, **characterized in that** the articulation or delivery of the probe occurs automatically, without direct operator action, by activating a special sequence of signals, and supplying them to the control drives, moving the executive part of the device along a predetermined path.

21. The device according to claim 19, **characterized in that** the articulation or delivery of the probe occurs automatically, without direct operator action, by activating a special sequence of signals, and supplying them to the control drives, moving the executive part of the device along a predetermined path.

22. The device according to claim 8, **characterized in that** there is no the white light source and the white light fiber, while navigation is carried out automatically along a given path or under laser light.

23. The device according to claim 8, **characterized in that** instead of the white light fiber, miniature LEDs of white or other spectrum are installed on the executive part of the system to create illumination.

24. The method according to claim 1, **characterized in that** for detecting foreign substances on the object under control, white light is directed to the object, which is partially reflected when interacting with the object and the energy of the reflected light in narrow spectral intervals is refer the presence of a foreign substance on the object under control, including, but not limited to, the detection of deposits, salts, oil, combustion products.

25. The method according to claim 24, **characterized in that** to obtain information about the concentration of a foreign substance on the object under control, the energy of the optical stream corresponding to the spectral interval of reflection of foreign substances is measured.

26. The method according to claim 24 or 25, **characterized in that** light is directed to the inspected item in a narrow spectral range, which is fixed after interaction with a foreign substance on the object under control and the presence of a foreign substance and its concentration are considered by the magnitude of the optical stream after interaction with the object and/or foreign substance.

27. The device according to claim 8, **characterized in that** an optical filter is installed in front of the camera, which has a light transmission bandwidth in a narrow spectral range, which corresponds to the reflection spectrum after the interaction of light with a substance located on the inspected item and being detected.

28. The device according to claim 27, **characterized in that** a set of replaceable optical filters is installed in front of the camera, which allow to vary the spectral interval of the received signal.

29. The device according to claim 27, **characterized in that** an acousto-optic filter is installed in front of the camera, the acousto-optic filter performs the function of an optical filter, with a variable spectral transmission interval.

30. The device according to claim 8, **characterized in that** an optical filter is installed after the white light source, having a light transmission bandwidth in a narrow spectral range that corresponds to the reflection spectrum after the interaction of light with a substance located on the object under control and being detected.

31. The device according to claim 30, **characterized in that** a set of replaceable optical filters is installed after the white light source, which allow to vary the spectral interval of the received signal.

32. The device according to claim 30, **characterized in that** an acousto-optic filter is installed after the white light source, the acousto-optic filter performs the function of an optical filter, with a variable spectral transmission interval.

33. The device according to claim 8 or 9 or 14 or 15 or 16 or 17 or 18 or 21 or 22 or 23 or 24 or 24 or 27 or 28 or 29 or 30 or 31 or 32, **characterized in that** there is an instrumental channel inside the executive part of the device, which may contain auxiliary devices for capturing objects or performing operations on them.

34. The device according to claim 8 or 9 or 14 or 15 or 16 or 17 or 18 or 21 or 22 or 23 or 27 or 28 or 29 or 30 or 31 or 32, **characterized in that** replaceable diffraction optical elements with different focusing planes of the projected image are used, so that a clear image of the projected laser image is carried out at different distances from the end of the executive part of the system.

35. The device according to claim 8 or 9 or 14 or 15 or 16 or 17 or 18 or 21 or 22 or 23 or 27 or 28 or 29 or 30 or 31 or 32, **characterized in that** a diffraction optical element with a multi-focus function is used, so that a clear image of the projected laser image is carried out at various predetermined distances from the end of the executive part of the system without replacing the diffraction elements.

36. The device according to claim 8, **characterized in that** a diffraction optical element with a multi-focus function is used, wherein a different and distinguishable image is created for each focusing plane, so if there is a clear image of the projected laser pattern, it is possible to differentiate the distance from the predefined sets of distances at which the surface of the controlled object is located from the end of the executive part of the device by the appearance of image.

37. Method of inspection of the shape of surface of part using a control system, including light illuminating with light source installed in the control system providing navigation across delivery path of an executive part of the control system, and delivery the equipment of the executive part of the control system to the part, which is equipped with a miniature stereo camera, wherein light radiation transmits through fiber optic, lens are provided at the output of the white light fiber, including optionally for the formation of a given radiation pattern of the object under control, providing video of the surface of the part using a video camera, transmitting the resulting video to the processing microcontroller unit, capturing video using data processing tools of microcontroller, video stream are processed with the aim of identifying faces and surfaces, a matrix of projections are created, based on which the sequence in time or sequence in different positions of the executive part of the device is analyzed, finding of the 3D shape of the objects under control, variance analysis actual projections from the reference, the detection of defects, detection of parts according a given reference and variance analysis of the 3D shape of the reference.

38. A device for inspection of the shape of hard-to-reach surface of part containing a measuring head attached to a flexible or rigid means of delivery, power and data transmission lines, and a white light optical fiber, wherein a controlled white light source is placed at the input of the white light optical fiber, a lens is located at the output of the white light optical fiber, the lens is placed in the measuring head and made with the possibility of forming a given indicatrix of intensity of the object under inspection, a miniature optical camera is also placed in the measuring head to provide a video of the hard-to-reach surface of the part, and a processing microcontroller unit made with the possibility capturing video, processing video stream with the aim of identifying faces and surfaces, creation matrix of projections, based on which analyzing the sequence in time or sequence in different positions of the executive part of the device find of the 3D shape of the objects under control, variance analysis actual projections from the reference, the detect of defects, detect of parts according a given reference and variance analysis of the 3D shape of the reference.
